# EUROPÄISCHE PATENTSCHRIFT

(11) **EP 2 260 996 B1**
(45) Veröffentlichungstag und Bekanntmachung des Hinweises auf die Patenterteilung: **16.03.2016**
(21) Anmeldenummer: 09007806.4
(22) Anmeldetag: 13.06.2009
(51) Int. Cl.: B29C 41/18, B29C 33/02

(54) **Formschale und Verfahren zur Herstellung einer Formschale**
Casting die and method for its manufacture
Coque et procédé destiné à la fabrication d'une coque

(43) Veröffentlichungstag der Anmeldung: 15.12.2010
(73) Patentinhaber: Galvanoform Gesellschaft für Galvanoplastik mbH, 77933 Lahr (DE); SMP Deutschland GmbH, 79268 Bötzingen (DE)
(72) Erfinder: Obergföll, Jürgen, 77933 Lahr (DE); Perlwitz, Uwe, 93354 Siegenburg (DE); Dreger, Ingolf, 93326 Abensberg (DE); Limmer, Markus, 93333 Schwaig (DE); Feldmer, Christian, 77933 Lahr (DE)
(74) Vertreter: RACKETTE Patentanwälte PartG mbB

(56) Entgegenhaltungen:
- EP-A- 0 465 867
- EP-A- 1 149 677
- EP-A- 1 318 371
- DE-A1- 4 444 796
- DE-A1- 10 021 489
- US-A1- 2002 100 858

## Beschreibung

Die Erfindung betrifft eine Formschale mit einer Anzahl von Wärmeleitstiften, die über jeweils eine Schweißverbindung jeweils mit einer Kontaktseite auf einer Temperierseite der Formschale angebracht sind.

Die Erfindung betrifft weiterhin ein Verfahren zur Herstellung einer derartigen Formschale.

Eine derartige Formschale sowie ein Verfahren zur Herstellung einer derartigen Formschale sind aus EP 0 465 867 A1 bekannt. Die vorbekannte Formschale verfügt auf einer Temperierseite über eine Anzahl von Wärmeleitstiften, die an der Temperierseite der Formschale zugewandten Kontaktseiten über eine durch ein Schweißverfahren hergestellte, verhältnismäßig großflächige Schweißverbindung mit der Formschale verbunden sind. Dadurch ist zwar eine mechanisch sehr stabile Verbindung zwischen den Wärmeleitstiften und der Formschale sichergestellt, allerdings besteht die Gefahr, dass die Formschale sich auf einer der Temperierseite gegenüberliegenden Formseite verformt. Weiterhin kann es sehr leicht vorkommen, dass beispielsweise bei einem Verkippen von Wärmeleitstiften gegenüber der Temperierseite der Formschale zwischen der Kontaktseite der Wärmeleitstifte und der Temperierseite der Formschale ein nicht optimaler Wärmeübergang erfolgt.

Aus EP 1 318 371 A2 ist ein Verfahren zum Ausbilden einer aufgalvanisierten Mikrostruktur von Vorsprüngen auf einer Wärmeübertragungsfläche bekannt, bei dem eine durch lonenbestrahlung sowie Laugeneinwirkung mit Abscheideausnehmungen ausgebildete Auflagemaske auf eine Formschale aufgelegt und nach Durchführen eines Galvanisierungsprozesses stiftartige Mikrostrukturen ausgebildet sind.

Aus DE 100 21 489 A1 ist ein Mikroherstellungsprozess zur Herstellung von Mikrostrukturen mit großem Seitenverhältnis bekannt, bei dem zum Ausbilden von stiftartigen Mikrostrukturprodukten ein Polymer unter Verkleinerung von zuvor eingebrachten Aufnahmeausnehmungen aufquillt.

Aus DE 44 44 796 A1 ist eine Struktur für die Befestigung von Temperatursteuerröhren bekannt, bei der auf der Rückseite der Temperatursteuerröhren eine die Temperatursteuerröhren an eine Formschale fixierende galvanogeformte Beschichtung vorhanden ist.

Aus EP 1 149 677 A2 sind ein Verfahren und eine Vorrichtung zur Herstellung einer Doppelslushhaut bekannt, bei der eine galvanisch hergestellte Formschale zum Einsatz kommt, die mit Versteifungsrippen versehen ist.

Der Erfindung liegt die Aufgabe zugrunde, eine Formschale der eingangs genannten Art sowie ein Verfahren zur Herstellung einer derartigen Formschale anzugeben, die sich auch bei einer verhältnismäßig geringen Materialdicke der Formschale durch eine sehr hohe Formstabilität auf einer der Temperierseite gegenüberliegenden Formseite sowie durch einen sehr guten Wärmeübergang zwischen den Wärmeleitstiften und der Formschale auszeichnen.

Diese Aufgabe wird bei einer Formschale der eingangs genannten Art erfindungsgemäß dadurch gelöst, dass die Schweißverbindungen Punktschweißverbindungen sind und dass zwischen den Kontaktseiten der Wärmeleitstifte sowie der Temperierseite der Formschale ein durch eine galvanische Schicht erzeugter vollflächiger Kontakt ausgebildet ist.

Diese Aufgabe wird bei einem Verfahren zur Herstellung einer derartigen Formschale erfindungsgemäß dadurch gelöst, dass die Schritte des Anbringens der Wärmeleitstifte jeweils mit einer Kontaktseite auf einer Temperierseite einer Formschale mittels einer Punktschweißverbindung erfolgt und nachfolgend des Durchführens einer galvanischen Abscheidung bis zum Ausbilden eines vollflächigen Kontaktes zwischen der Kontaktseite der Wärmeleitstifte und der Temperierseite der Formschale durchgeführt werden.

Dadurch, dass erfindungsgemäß der Kontakt zwischen den Wärmeleitstiften und der Formschale über eine durch galvanische Abscheidung hergestellte Schicht erfolgt, ist auch bei gekrümmten Konturen der Temperierseite der Formschale oder bei gegenüber der Formschale verkippten Wärmeleitstiften ein sehr guter Wärmeübergang erzielt, da derartige strukturell bedingte Formabweichungen durch die ausgebildete galvanische Schicht ausgeglichen werden.

Weitere zweckmäßige Ausgestaltungen der Erfindung sind Gegenstand der Unteransprüche.

Nachfolgend wird die Erfindung mit weiteren zweckmäßigen Ausgestaltungen und Vorteilen der Erfindung anhand von Ausführungsbeispielen näher erläutert.

Es zeigen:
- Fig. 1: in einer perspektivischen Ansicht einen Ausschnitt aus einer Formschale mit daran provisorisch angebrachten Wärmeleitstiften,
- Fig. 2: die Anordnung gemäß Fig. 1 im Schnitt,
- Fig. 3: die Anordnung gemäß Fig. 1 im Schnitt nach Durchführen einer galvanischen Abscheidung,
- Fig. 4: in einer perspektivischen Ansicht einen Ausschnitt aus einer Formschale mit provisorisch daran angebrachten Wärmeleitstiften sowie mit einer zwischen die Wärmeleitstifte eingelegten Gitterstruktur,
- Fig. 5: die Anordnung gemäß Fig. 4 im Schnitt,
- Fig. 6: die Anordnung gemäß Fig. 4 im Schnitt nach Durchführen einer galvanischen Abscheidung,
- Fig. 7: in einer Schnittansicht eine Formschale mit einer konturangepassten Auflagemaske (nicht Teil der Erfindung),
- Fig. 8: die Anordnung gemäß Fig. 7 nach Durchführen einer galvanischen Abscheidung (nicht Teil der Erfindung) und
- Fig. 9: die Anordnung gemäß Fig. 8 nach Entfernen der Auflagemaske (nicht Teil der Erfindung).

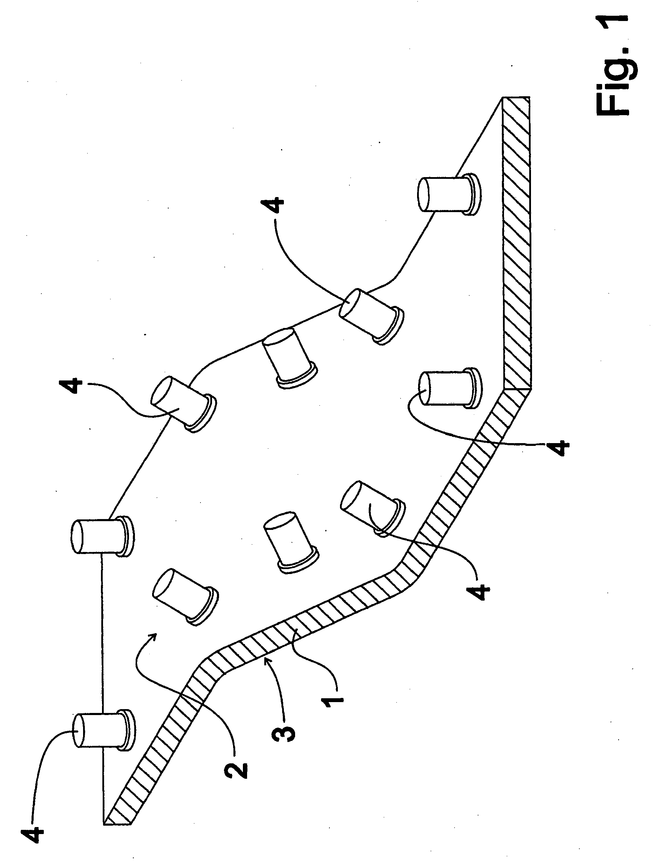

Fig. 1 zeigt in einer perspektivischen Ansicht einen Ausschnitt aus einer durch galvanische Abscheidung hergestellten, komplex in drei Dimensionen geformten metallischen Formschale 1, die über eine in der Darstellung gemäß Fig. 1 dem Betrachter zugewandte Temperierseite 2 und über eine in der Darstellung gemäß Fig. 1 dem Betrachter abgewandte Formseite 3 verfügt. Die Formseite 3 ist bei einem bestimmungsgemäßen Einsatz der Formschale 1 beispielsweise bei einem sogenannten "slush molding"-Verfahren als Arbeitsseite äußerst maßhaltig zu halten und durch Wärmeeintrag über die Temperierseite 2 aufzuwärmen beziehungsweise abzukühlen. Dadurch ist es sehr vorteilhaft, dass die Formschale 1 verhältnismäßig dünn ausgebildet ist.

Um den Wärmeeintrag von der Temperierseite 2 gegenüber einer einfachen Formschale 1 zu verbessern, ist eine Anzahl von metallischen Wärmeleitstiften 4 vorhanden, die in der Anordnung gemäß Fig. 1 noch provisorisch durch eine gegenüber den Abmessungen der Wärmeleitstifte 4 sehr kleine Punktschweißverbindung an der Temperierseite 2 der Formschale 1 angebracht sind.

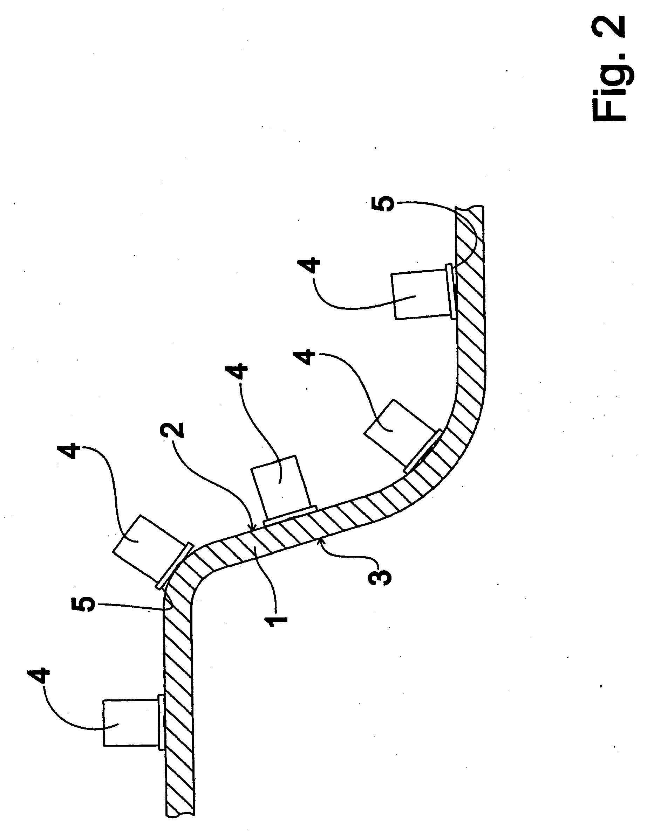

Fig. 2 stellt die Anordnung von Formschale 1 und Wärmeleitstiften 4 gemäß Fig. 1 in einer Schnittansicht dar. Aus Fig. 2 ist ersichtlich, dass die Wärmeleitstifte 4 mit einer der Temperierseite 2 zugewandten flachen Kontaktseite 5 ausgebildet sind, die in flachen Bereichen der Temperierseite 2 im Idealfall flächig auf der Temperierseite 2 aufliegen. Dieser Idealfall liegt jedoch, wie beispielsweise bei dem in der Darstellung gemäß Fig. 2 am weitesten rechts gelegenen Wärmeleitstift 4 ersichtlich ist, nicht immer vor, sondern Wärmeleitstifte 4 können gegenüber flachen Bereichen der Temperierseite 2 unter Ausbilden eines Spaltes verkippt oder auch geringfügig beabstandet sein. Weiterhin ergibt sich aus der dreidimensionalen Gestalt der Formschale 1 insbesondere auch die Situation, dass bei gekrümmten Abschnitten der Temperierseite 2 die flachen Kontaktseiten 5 der in diesen Abschnitten angeordneten Wärmeleitstifte 4 zwangsweise eine nur teilflächigen oder gar nur punktuellen Kontakt mit der Temperierseite 2 aufweisen, wie dies in der Anordnung gemäß Fig. 2 bei dem von links gezählten zweiten Wärmeleitstift 4 und bei dem von rechts gezählten zweiten Wärmeleitstift 4 deutlich sichtbar ist.

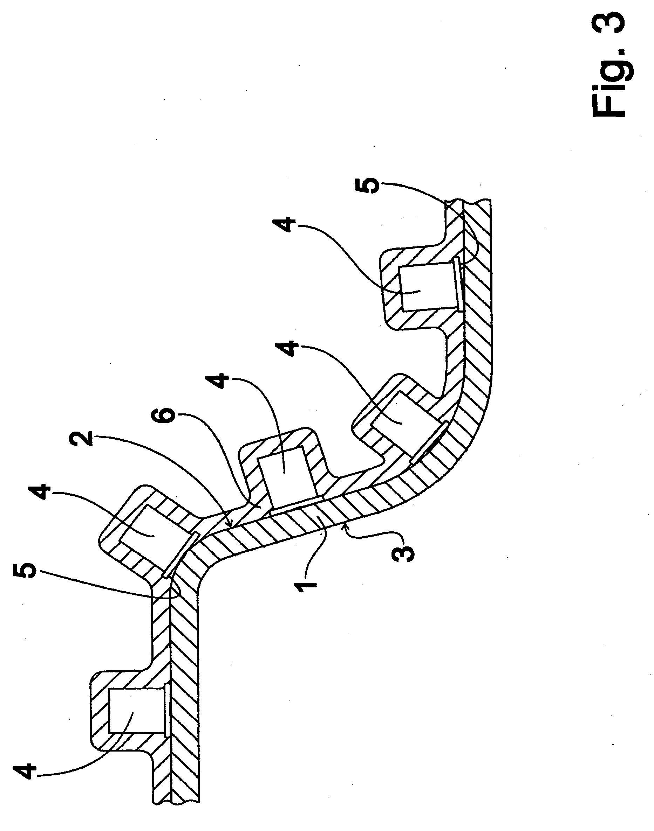

Fig. 3 zeigt in einer Schnittansicht die erfindungsgemäße beispielhafte Anordnung der mit Wärmeleitstiften 4 versehenen Formschale 1 im Schnitt nach erfindungsgemäßen Durchführen einer galvanischen Abscheidung, bei der ausgehend von einer Anordnung gemäß Fig. 1 beziehungsweise gemäß Fig. 2 eine galvanische Abscheidung einer galvanischen Schicht 6 durchgeführt worden ist. Das Abscheiden der galvanischen Schicht 6 führt zum einen zu einem Auffüllen von zwischen Kontaktseiten 5 von Wärmeleitstiften 4 und der Temperierseite 2 ausgebildeten Freiräumen, wodurch zuverlässig ein vollflächiger Kontakt aller Kontaktseiten 5 mit der Temperierseite 2 erzielt ist, und zum anderen zu einem vollständigen Überdecken der Temperierseite 2 sowie der Wärmeleitstifte 4, das weiterhin die mechanische Verbindung zwischen den Wärmeleitstiften 4 und der Formschale 1 gegenüber einer Punktschweißverbindung verbesserte sowie die Stabilität der Formschale 1 gegenüber der Anordnung gemäß Fig. 1 beziehungsweise gemäß Fig. 2 insgesamt erhöht.

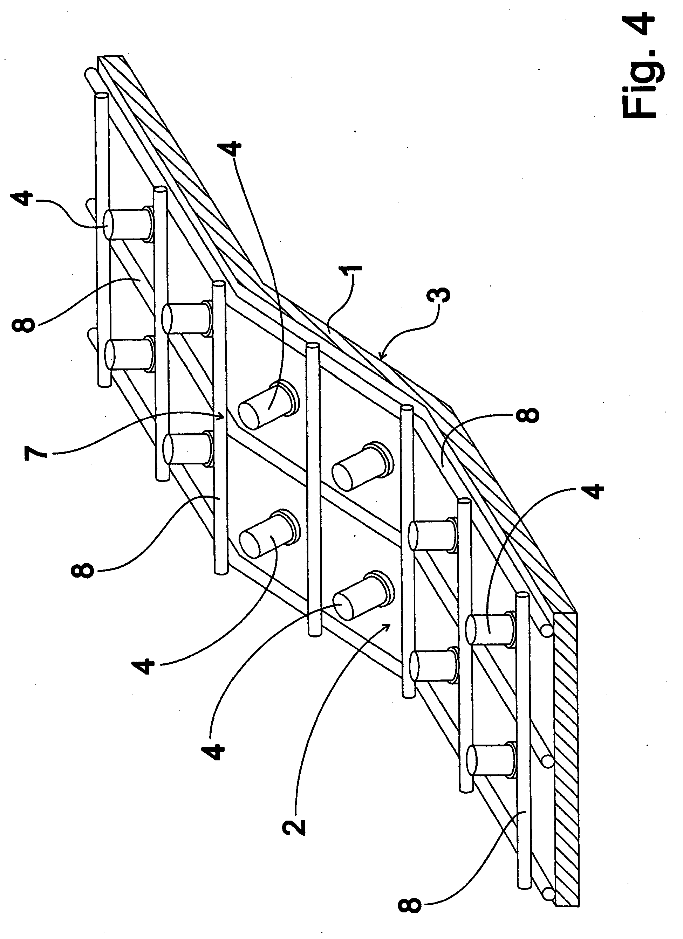

Fig. 4 stellt in einer perspektivischen Ansicht einen Ausschnitt aus einer entsprechend dem Ausführungsbeispiel von Fig. 1 bis Fig. 3 dreidimensional ausgebildeten Formschale 1 mit provisorisch daran angebrachten Wärmeleitstiften 4 dar. In der Anordnung gemäß Fig. 4 ist zwischen die Wärmeleitstifte 4 eine Gitterstruktur 7 eingelegt, die aus einer Anordnung von sich kreuzenden Gitterstäben 8 gebildet ist. Dabei sind die Gitterstäbe 8 im wesentlichen mittig zwischen Wärmeleitstiften 4 angeordnet und dem Konturverlauf der Temperierseite 2 der Formschale 1 verhältnismäßig genau angepasst.

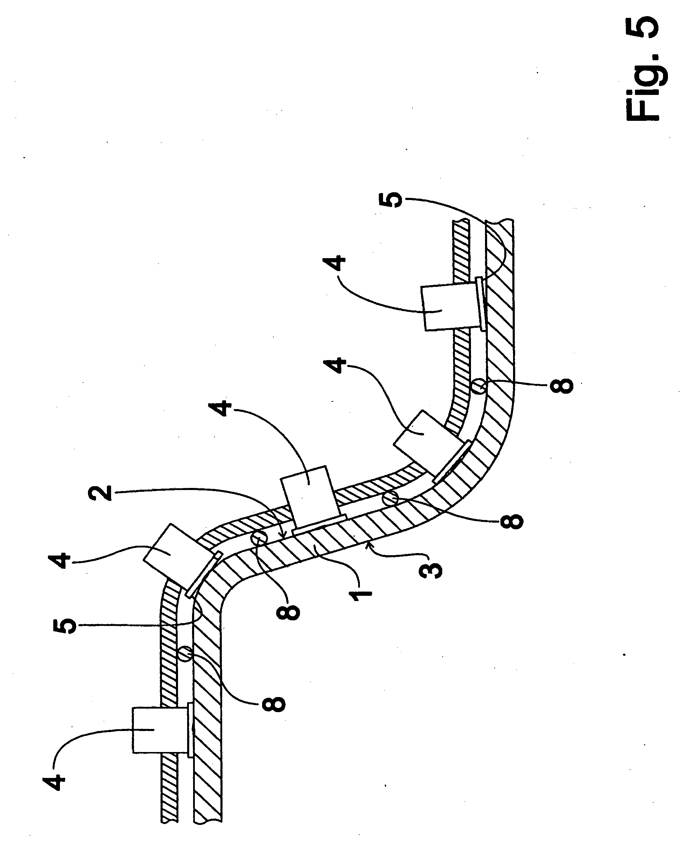

Fig. 5 zeigt die Anordnung gemäß Fig. 4 im Schnitt. Aus Fig. 5 ist ersichtlich, dass eine erste Gruppe der Gitterstäbe 8 direkt auf der Temperierseite 2 der Formschale 1 aufliegt, während eine zweite Gruppe der Gitterstäbe 8 auf dem ersten Teil der Gitterstäbe 8 aufliegt und demzufolge in einem Abstand von der Temperierseite 2 der Formschale 1 angeordnet ist.

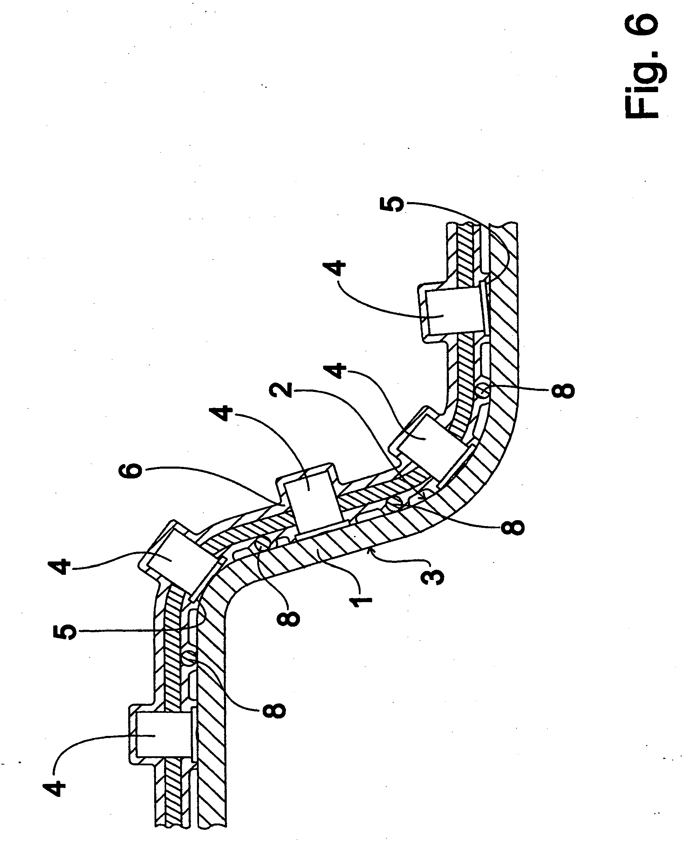

Fig. 6 stellt in einer Schnittansicht die erfindungsgemäße beispielhafte Anordnung der mit Wärmeleitstiften 4 versehenen Formschale 1 nach Fig. 4 und Fig. 5 im Schnitt nach erfindungsgemäßen Durchführen einer galvanischen Abscheidung dar, bei der ausgehend von einer Anordnung gemäß Fig. 4 beziehungsweise gemäß Fig. 5 eine galvanische Abscheidung einer galvanischen Schicht 6 durchgeführt worden ist. Das Abscheiden der galvanischen Schicht 6 führt auch bei diesem erfindungsgemäßen Ausführungsbeispiel zum einen zu einem Auffüllen von zwischen Kontaktseiten 5 von Wärmeleitstiften 4 und der Temperierseite 2 ausgebildeten Freiräumen, wodurch zuverlässig ein vollflächiger Kontakt aller Kontaktseiten 5 der Wärmeleitstifte 4 mit der Temperierseite 2 der Formschale 1 und zum anderen zu einem vollständigen Umschließen der Wärmeleitstifte 4 sowie der Gitterstäbe 8 von der galvanischen Schicht 6 erzielt ist, wodurch die auf der Temperierseite 2 aufliegende erste Gruppe von Gitterstäben 8 fest mit der Temperierseite 2 verbunden ist. Dadurch stabilisiert die aus den Gitterstäben 8 gebildete Gitterstruktur 7 die Formschale 1, wobei gegenüber dem Ausführungsbeispiel gemäß Fig. 1 bis Fig. 3 insgesamt ein geringerer Materialverbrauch zum Ausbilden der galvanischen Schicht 6 festzustellen ist.

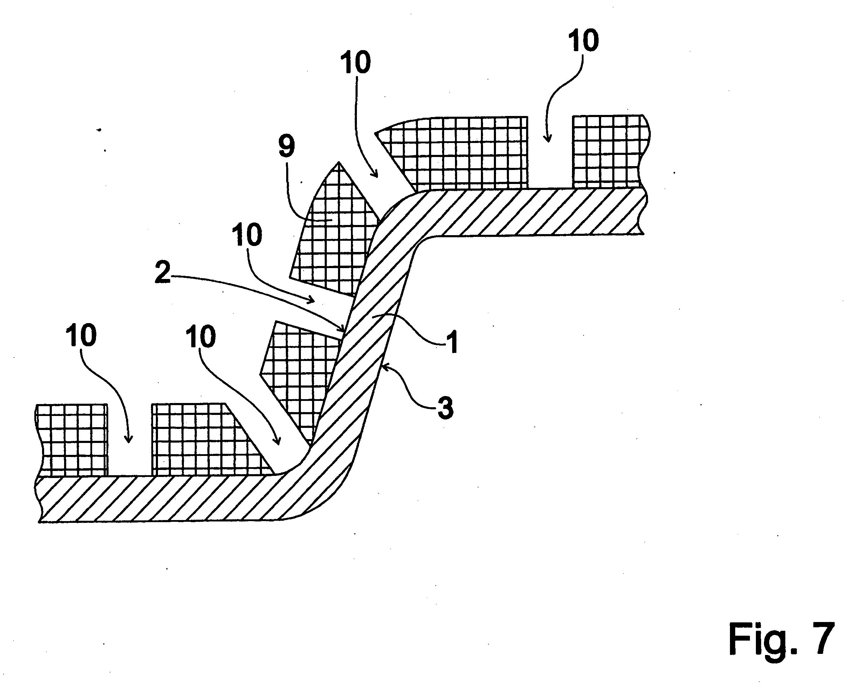

Fig. 7 zeigt in einer Schnittansicht eine dreidimensional geformte metallische Formschale 1, die entsprechend den vorangehend erläuterten Beispielen eine Temperierseite 2 und eine Formseite 3 aufweist. Bei dem Beispiel gemäß Fig. 7 ist bei einem Schritt eines alternativen Verfahrens auf die Temperierseite 2 der Formschale 1 eine an die Kontur der Temperierseite 2 angepasste Auflagemaske 9 aufgelegt. Die Auflagemaske 9 ist aus einem elektrisch nichtleitenden Material hergestellt und verfügt über eine Anzahl von zweckmäßigerweise zylindrisch ausgebildeten Abscheideausnehmungen 10. Dabei ist die Auflagemaske 9 so genau an die Kontur der Temperierseite 2 der Formschale 1 angepasst, dass die zwischen den Abscheideausnehmungen 10 liegenden Bereiche spaltfrei auf der Temperierseite 2 aufliegen.

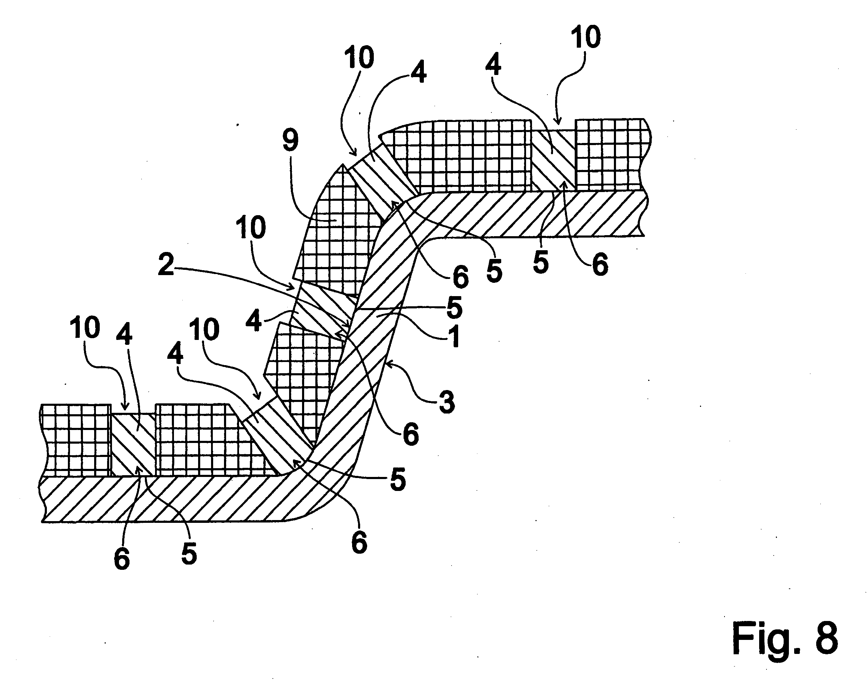

Fig. 8 stellt die Anordnung gemäß Fig. 7 nach Durchführen einer galvanischen Abscheidung als einem weiteren Schritt dieses Verfahrens dar. Aus Fig. 8 ist ersichtlich, dass die Abscheideausnehmungen 10 nunmehr unter anfänglichen Ausbilden einer galvanischen Schicht 6 unmittelbar angrenzend an die Temperierseite 2 der Formschale 1 mit Wärmeleitstiften 4 gefüllt sind. Die Wärmeleitstifte 4 füllen im Wesentlichen vollständig, zweckmäßigerweise jedoch wenigstens bis zur Hälfte der Dicke der Auflagemaske 9, die Abscheideausnehmungen 10 aus und sind aus dem strukturell mit der galvanischen Schicht 6 homogenen, galvanisch abgeschiedenen Material gebildet. Dadurch haben die Wärmeleitstifte 4 mit ihren Kontaktseiten 5 einen vollflächigen Kontakt mit der Temperierseite 2 der Formschale 1.

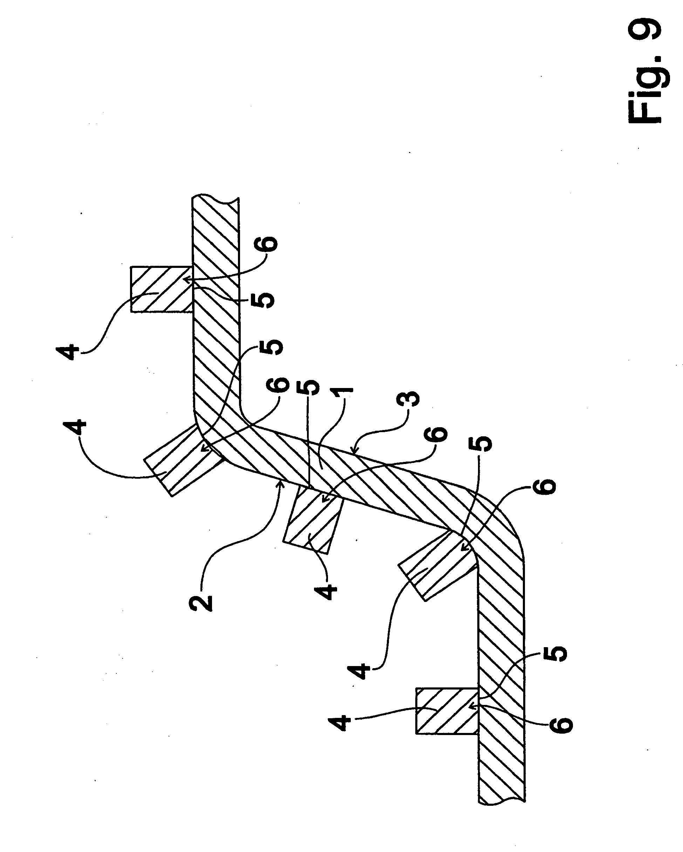

Fig. 9 zeigt die Anordnung gemäß Fig. 8 nach Entfernen der Auflagemaske 9 als einem weiteren Schritt dieses Verfahrens. Nach diesem Schritt liegen die spaltfrei an die Kontur der Temperierseite 2 der Formschale 1 angepassten Wärmeleitstifte 4 nunmehr frei und sind ohne irgendwelche mechanische Einwirkung auf die Formschale 1, die die Qualität der Formseite 3 insbesondere bei verhältnismäßig dünnen Formschalen 1 nachteilig beeinflussen könnten, fest mit der Formschale 1 verbunden.

## Patentansprüche

1. Formschale mit einer Anzahl von Wärmeleitstiften (4), die über jeweils eine Schweißverbindung jeweils mit einer Kontaktseite (5) auf einer Temperierseite (2) der Formschale (1) angebracht sind, wobei die Schweißverbindungen Punktschweißverbindungen sind, **dadurch gekennzeichnet dass** zwischen den Kontaktseiten (5) der Wärmeleitstifte (4) sowie der Temperierseite (2) der Formschale (1) ein durch eine galvanische Schicht (6) erzeugter vollflächiger Kontakt ausgebildet ist.

2. Formschale nach Anspruch 1, **dadurch gekennzeichnet, dass** die galvanische Schicht (6) die Temperierseite (2) der Formschale (1) und die Wärmeleitstifte (4) überdeckt.

3. Formschale nach Anspruch 1, **dadurch gekennzeichnet, dass** zwischen den Wärmeleitstiften (4) eine Gitterstruktur (7) mit sich kreuzenden Gitterstäben (8) angeordnet ist.

4. Formschale nach Anspruch 3, **dadurch gekennzeichnet, dass** die galvanische Schicht (6) die Wärmeleitstifte (4) überdeckt und die Gitterstäbe (8) umgibt.

5. Verfahren zur Herstellung einer Formschale (1) nach einem der Ansprüche 1 bis 4 mit den Schritten des Anbringens von Wärmeleitstiften (4) mit jeweils einer Kontaktseite (5) auf einer Temperierseite (2) der Formschale (1) mittels einer Punktschweißverbindung und nachfolgend des Durchführens einer galvanischen Abscheidung bis zum Ausbilden eines vollflächigen Kontaktes zwischen den Kontaktseiten (5) der Wärmeleitstifte (4) und der Temperierseite (2) der Formschale (1).

6. Verfahren nach Anspruch 5, **dadurch gekennzeichnet, dass** das Durchführen der galvanischen Abscheidung so lange erfolgt, bis eine galvanische Schicht die Temperierseite (2) der Formschale (1) und die Wärmeleitstifte (4) überdeckt.

7. Verfahren nach Anspruch 5, **dadurch gekennzeichnet, dass** vor oder nach dem Schritt des Anbringens der Wärmeleitstifte (4) eine an die Kontur der Temperierseite (2) der Formschale (1) angepasste Gitterstruktur (7) auf die Temperierseite (2) der Formschale (1) aufgelegt wird.

## Claims

1. Mould having a plurality of heat-conducting pins (4) which are attached, by means of respective welded joints, to a temperature-control side (2) of the mould (1) by respective contact-making ends (5), the welded joints being spot-welded joints, **characterised in that** contact is created between the temperature-control side (2) of the mould (1) and the full area of the contact-making ends (5) of the heat-conducting pins (4) by means of an electroplated layer (6).

2. Mould according to claim 1, **characterised in that** the electroplated layer (6) covers the temperature-control side (2) of the mould (1) and the heat-conducting pins (4).

3. Mould according to claim 1, **characterised in that** a grid structure (7) having intersecting grid bars (8) is arranged between the heat-conducting pins (4).

4. Mould according to claim 3, **characterised in that** the electroplated layer (6) covers the heat-conducting pins (4) and surrounds the grid bars (8).

5. Method of producing a mould (1) according to one of claims 1 to 4, having the steps of attaching, by means of respective spot-welded joints, heat-conducting pins (4) to a temperature-control side (2) of the mould (1) by respective contact-making ends (5) and then carrying out deposition by electroplating until contact is created between the temperature-control side (2) of the mould (1) and the full area of the contact-making ends (5) of the heat-conducting pins (4).

6. Method according to claim 5, **characterised in that** the deposition by electroplating is carried out until an electroplated layer covers the temperature-control side (2) of the mould (1) and the heat-conducting pins (4).

7. Method according to claim 5, **characterised in that** a grid structure (7) matched to the contours of the temperature-control side (2) of the mould (1) is applied to said temperature-control side (2) of the mould (1) before or after the step of attaching the heat-conducting pins (4).

## Revendications

1. Coque de moulage pourvue d'un certain nombre de broches thermoconductrices (4) qui sont appliquées chacune au moyen d'une soudure par une face de contact (5) respective sur une face de tempérage (2) de la coque de moulage (1), les soudures étant des soudures par points, **caractérisée en ce qu'**un contact en pleine surface produit par une couche galvanique (6) est créé entre les faces de contact (5) des broches thermoconductrices (4) et la face de tempérage (2) de la coque de moulage (1).

2. Coque de moulage selon la revendication 1, **caractérisée en ce que** la couche galvanique (6) recouvre la face de tempérage (2) de la coque de moulage (1) et les broches thermoconductrices (4).

3. Coque de moulage selon la revendication 1, **caractérisée en ce qu'**une structure de grille (7) avec des barreaux de grille (8) entrecroisés est disposée entre les broches thermoconductrices (4).

4. Coque de moulage selon la revendication 3, **caractérisée en ce que** la couche galvanique (6) recouvre les broches thermoconductrices (4) et entoure les barreaux de grille (8).

5. Procédé de fabrication d'une coque de moulage (1) selon l'une des revendications 1 à 4, présentant les étapes consistant à appliquer des broches thermoconductrices (4) par une face de contact (5) respective sur une face de tempérage (2) de la coque de moulage (1) au moyen d'une soudure par points et ensuite à réaliser un dépôt galvanique jusqu'à la création d'un contact en pleine surface entre les faces de contact (5) des broches thermoconductrices (4) et la face de tempérage (2) de la coque de moulage (1).

6. Procédé selon la revendication 5, **caractérisé en ce que** le dépôt galvanique est réalisé jusqu'à ce qu'une couche galvanique recouvre la face de tempérage (2) de la coque de moulage (1) et les broches thermoconductrices (4).

7. Procédé selon la revendication 5, **caractérisé en ce qu'**avant ou après l'étape consistant à appliquer les broches thermoconductrices (4), une structure de grille (7) adaptée au contour de la face de tempérage (2) de la coque de moulage (1) est posée sur la face de tempérage (2) de la coque de moulage (1).
